(19) **Europäisches Patentamt European Patent Office Office européen des brevets**

(11) **EP 2 927 280 B1**

(12) **EUROPEAN PATENT SPECIFICATION**

(45) Date of publication and mention of the grant of the patent:
**15.08.2018 Bulletin 2018/33**

(51) Int Cl.:
*C08L 69/00* (2006.01)     *C08K 5/42* (2006.01)
*C08K 5/00* (2006.01)      *C08J 3/00* (2006.01)
*C08J 3/09* (2006.01)

(21) Application number: **13858925.4**

(22) Date of filing: **26.11.2013**

(86) International application number:
**PCT/JP2013/081689**

(87) International publication number:
**WO 2014/084180 (05.06.2014 Gazette 2014/23)**

(54) **AROMATIC POLYCARBONATE RESIN COMPOSITION, METHOD FOR PRODUCING SAME, AND MOLDED ARTICLE FORMED FROM AROMATIC POLYCARBONATE RESIN COMPOSITION**

AROMATISCHE POLYCARBONATHARZZUSAMMENSETZUNG, VERFAHREN ZUR HERSTELLUNG DAVON UND AUS DER AROMATISCHEN POLYCARBONATHARZZUSAMMENSETZUNG GEFORMTER FORMKÖRPER

COMPOSITION DE RÉSINE DE POLYCARBONATE AROMATIQUE, PROCÉDÉ DE PRODUCTION ASSOCIÉ ET ARTICLE MOULÉ FORMÉ À PARTIR DE LA COMPOSITION DE RÉSINE DE POLYCARBONATE AROMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.11.2012 JP 2012260235**

(43) Date of publication of application:
**07.10.2015 Bulletin 2015/41**

(60) Divisional application:
**16198610.4 / 3 150 671**

(73) Proprietor: **Mitsubishi Gas Chemical Company, Inc.**
**Tokyo 100-8324 (JP)**

(72) Inventors:
• **SUZUKI Shoko**
  **Kamisu-shi**
  **Ibaraki 314-0102 (JP)**

• **TAJIMA Jun**
  **Kamisu-shi**
  **Ibaraki 314-0102 (JP)**
• **NAGASHIMA Hiromitsu**
  **Tokyo 100-8324 (JP)**

(74) Representative: **Hoffmann Eitle**
**Patent- und Rechtsanwälte PartmbB**
**Arabellastraße 30**
**81925 München (DE)**

(56) References cited:
**WO-A1-2011/132510     WO-A1-2011/132510**
**WO-A1-2011/149030     JP-A- H0 659 470**
**JP-A- S58 138 754      JP-A- S58 138 754**
**JP-A- 2009 185 205     JP-A- 2009 185 205**
**US-A1- 2010 256 279**

**Description**

TECHNICAL FIELD

The present invention relates to an aromatic polycarbonate resin composition and a molded article formed therefrom. More particularly, the present invention relates to an aromatic polycarbonate resin composition for obtaining a highly transparent flame-retardant molded article.

BACKGROUND ART

A polycarbonate resin is a resin that is superior in heat resistance, mechanical property and electric property, and widely used, for example, as automobile materials, electric and electronic equipment materials, materials for various home electric appliances, housing materials, and materials used for manufacturing components in other industrial fields. In particular, a flame retarded polycarbonate resin composition is suitably used as a member of office automation/information devices such as a computer, a notebook personal computer, a cellular phone, a printer or a copier.

Conventionally, a halogenated flame retardant or a phosphorous flame retardant is admixed with a polycarbonate resin so as to confer flame retardancy to the polycarbonate resin. However, a polycarbonate resin composition admixed with a halogenated flame retardant containing chlorine or bromine may cause decrease in heat stability, or corrosion of a screw of a molding machine or a mold upon molding fabrication. Moreover, since a polycarbonate resin composition admixed with a phosphorous flame retardant may interfere with high transparency that is characteristic of the polycarbonate resin, or may cause decrease in impact resistance or heat resistance, the use thereof may be limited. Additionally, these halogenated flame retardant and phosphorous flame retardant could lead to environmental contamination upon disposal, recovery of the like of a molded article formed from the polycarbonate resin composition, and therefore flame retardation without use of these flame retardants have been desired in recent years.

First, a flame-retardant and transparent polycarbonate resin composition will be described.

As a method for achieving a highly flame-retardant polycarbonate resin composition, a method in which polycarbonate resins with different molecular weights are mixed is known. For example, Patent Document 1 discloses a flame-retardant polycarbonate resin composition which is produced by admixing: "(A) a halogen atom-free polycarbonate resin having a viscosity-average molecular weight of 10,000-30,000; (B) a flame retardant in an amount required for flame retardation; and (C) a halogen atom-free polycarbonate resin having a viscosity-average molecular weight of 100,000-250,000".

The flame retardant illustrated in this document may be any flame retardant as long as it can be used as a flame retardant for a polycarbonate resin, and a halogen-substituted phosphoester and the like are exemplified in the examples. This document does not mention about transparency.

Patent Document 3 describes decrease in transparency due to phosphoester and a method for improving the same. The transparency pursued by the present invention is much higher than this. Other than this example, transparency of a molded article is known to be impaired depending on the type of the flame retardant.

Other than Patent Document 1, a flame-retardant polycarbonate resin composition made from two types of polycarbonate resins and a flame retardant is described, for example, in Patent Document 2. The flame-retardant polycarbonate resin compositions disclosed in these patent documents, however, are expected to have trouble in moldability when the viscosity-average molecular weight of the polycarbonate used is 100,000 or more, and have the problems in flame retardancy and transparency of the resulting molded article because the proportion of the flame retardant added is 0.1 parts by weight or more.

Meanwhile, Patent Document 4 describes a polycarbonate resin composition for a transparent eyeglass lens that uses a combination of polycarbonate resins having different molecular weights, and mentions about transparent foreign matters as a cause of decrease in transparency. As a method for solving the problem, the document discloses production of a resin composition by mixing an aromatic polycarbonate (HPC) with a viscosity-average molecular weight of 22,000-31,000, and an aromatic polycarbonate (LPC) having a viscosity-average molecular weight within a range of 14,000-25,000 and lower than that of HPC by 3,000-11,000.

Although this document does not mention about a method for flame retarding a molded article produced from a resin composition, there is room for improving flame retardancy since the difference in the molecular weights between HPC and LPC is smaller than the value described in Patent Document 1.

Patent Document 6 describes an aromatic polycarbonate resin having a viscosity-average molecular weight of 3,000 to 25,000, an aromatic polycarbonate resin having a viscosity-average molecular weight of 50,000 to 90,000, and a transparent flame-retardant aromatic polycarbonate resin made of alkali metal salt of organic sulfonic acid.

Patent Document 7 describes a transparent flame-retardant aromatic polycarbonate resin consisting of an aromatic polycarbonate resin, a fluorine-containing organic metal salt and other additives. The text of Patent Document 7 describes that the resin may also be obtained by mixing two types of aromatic polycarbonate resins having different molecular weights. Furthermore, the document also describes that the ability of preventing dripping upon combustion can be enhanced when the resin contains an aromatic polycarbonate resin having a viscosity-average molecular weight over 50,000.

Patent Document 4 mentioned above describes transparent foreign matters as unmelted pieces remaining in the polycarbonate resin molded article. The document describes, in paragraph 0016, as follows: "according to the present invention, a transparent foreign matter refers to an unmelted pieces of the aromatic polycarbonate resin contained in the product (molded article), where transparent matters with unspecified shapes can be confirmed in the product with a transmission-type microscope as subtle difference in the refractive indexes and the states of transmitted light at the interface between the sufficiently melted part and the unmelted pieces. The transparent foreign matters may sometimes be confirmed visibly as dot-like bright spots upon visual observation under fluorescent light. Since an aromatic polycarbonate resin composition according to the present invention contains a mixture of HPC and LPC whose difference in viscosity-average molecular weights is 3,000 or more, the melting temperatures are different between HPC and LPC, and thus insufficient melting/kneading may leave unmelted or insufficiently melted parts in the product (molded article). If unmelted or insufficiently melted parts that are left unmelted upon melting/kneading are contained in the product, there would be subtle difference in the states of transmitted light at the interface with the sufficiently melted parts and transparent matters with unspecified shapes and bright spots may be confirmed".

Moreover, optical disks made from a polycarbonate resin are known to show white spots upon hygroscopic property/heat resistance test, which are not caused upon production of molded articles. It is also known that when a polycarbonate resin produced by transesterification technique is melted, cross-linking reaction of the resin is caused due to a catalyst such as alkali metal salt remaining in the resin, resulting in transparent foreign matters.

Accordingly, knowledge of transparent flame-retardant polycarbonate resins with less unmelted pieces that impair transparency is still poor.

Next, a method for mixing polycarbonate resins having different molecular weights will be described.

Patent Document 1 describes as follows: "the composition of the present invention is produced by any method, for example, a method in which predetermined amounts of grained polycarbonate resin A, polycarbonate resin B and flame retardant are added and mixed together simultaneously or in any order, a method in which a solution or grains of one of polycarbonate resin A or polycarbonate resin B is added to and mixed with a solution of the other component simultaneously or in any order, or the like".

Patent Document 3 describes as follows: "The method for producing the polycarbonate resin composition of the present invention is not limited, and a wide range of methods known for producing polycarbonate resin compositions can be employed"; "In addition, for example, when mixing a poorly-dispersed component, that poorly-dispersed component can be dissolved or dispersed and kneaded with in a solvent such as water or an organic solvent in advance so that the dispersibility can be enhanced" (Patent Document 3, paragraphs 0139 to 0140).

Patent Document 4 describes as follows: "Mixing processes that are advantageous in terms of cost are the melting/kneading processes recited in (1), among which, processes that perform melting/kneading using a single-screw extruder or a twin-screw extruder are favorable. In order to reduce the transparent foreign matters in the aromatic polycarbonate resin composition, conditions that allows sufficient kneading of the molten resin in the extruder are preferably employed."; "However, when the melt viscosity of the resin composition is high, for example, when the viscosity-average molecular weight is 24,000 or more, clogging of the filter attached to the extruder will occur frequently, which will result in significant decrease in the productivity upon melting/kneading" (Patent Document 4, paragraph 0019).

Additionally, with respect to the process for mixing two types of polycarbonates, Patent Document 1 only describes in the text that the production can take place by an arbitrary process, and does not mention about superiority in terms of appearance.

Patent Document 5 describes in the text that the methylene chloride or chlorobenzene solutions containing components (A) and (B) are mixed and then the solvent is evaporated from this solution, but does not mention anything about superiority in terms of flame retardancy and appearance thereof.

Patent Documents 6 and 7 describe transparent flame-retardant polycarbonate resin compositions, but do not particularly describe about a process for mixing polycarbonate resins having different molecular weights.

Hence, knowledge of processes for mixing polycarbonate resin compositions that are effective for providing transparency is still poor.

PRIOR ART DOCUMENTS

Patent Documents

Patent Document 1: Japanese Patent Laid-open Publication No. H02-251561

Patent Document 2: Japanese Patent Laid-open Publication No. H09-59505
Patent Document 3: Japanese Patent Laid-open Publication No. 2012-31244
Patent Document 4: Japanese Patent No. 4881560
Patent Document 5: Japanese Patent Laid-open Publication No. S56-45945
Patent Document 6: WO2011/132510 A1
Patent Document 7: WO2006/008858

SUMMARY OF THE INVENTION

Problems to be solved by the Invention

The present invention aims at solving at least one of the above-described conventional problems. In particular, the present invention aims at providing an aromatic polycarbonate resin composition for obtaining a highly transparent flame-retardant molded article and a transparent flame-retardant molded article formed therefrom.

Means for Solving the Problem

The present inventors found that the above-described problems can be solved by the present invention recited in the claims.

ADVANTAGEOUS EFFECT OF THE INVENTION

According to a preferable embodiment of the present invention, the above-described polycarbonate resin composition can be used not only for conferring good flame retardancy to a molded article but also for providing a molded article that is excellent in transparency with a low haze value and less unmelted pieces. In addition, according to a preferable embodiment of the present invention, the proportion of a flame retardant added can be reduced and thus a molded article that is excellent in transparency with a low haze value can be obtained.

EMBODIMENTS FOR CARRYING OUT THE INVENTION

Hereinafter, the present invention will be described in detail by means of embodiments and examples. The present invention, however, is not limited to the embodiments, examples and the like described below, and can be carried out with any modification without departing from the scope of the present invention.
A viscosity-average molecular weight (Mv) of an aromatic polycarbonate resin-A is 11,000-21,000.
A viscosity-average molecular weight (Mv) of an aromatic polycarbonate resin-B is 67,000-85,000.
If a mass percentage of an aromatic polycarbonate resin-A is $\alpha$, the mass percentage $\beta$ of an aromatic polycarbonate resin-B would be (100 - $\alpha$), where the value of $\alpha$ is $60 \leq \alpha \leq 90$. Accordingly, the value $\beta$ is $10 \leq \beta \leq 40$.
An aromatic polycarbonate resin-A and an aromatic polycarbonate resin-B used with the present invention are resins of an aromatic dihydroxy compound, or a polymer or a copolymer of a linear or an optionally branched thermoplastic aromatic polycarbonate obtained through the reaction between the aromatic dihydroxy compound and a small amount of a polyhydroxy compound.
They may be produced by an already known synthesis technique such as interfacial polymerization or transesterification technique. Upon producing them, a molecular weight regulator or a terminal stopping agent can appropriately be selected so as to prepare aromatic polycarbonate resins-A and -B having different molecular weights.
These aromatic polycarbonate resins may also be selected from commercial products. Specifically, Iupilon "H-4000", Iupilon "H-7000", Iupilon "H-3000", Iupilon "S-3000", Iupilon "AL-071", NOVAREX "7020R" or NOVAREX "7022R" (all manufactured by Mitsubishi Engineering-Plastics Corporation), Lexan "121", Lexan "124" or Lexan "141" (manufactured by SABIC Innovative Plastics), Panlite "L-1225L", Panlite "L-1225Y", Panlite "L-1225LM", Panlite "L-1225WX", Panlite "L-1225WS" or Panlite "L-1225WP" (manufactured by Teijin Chemicals Ltd), Tarflon "A1700", Tarflon "A1900" or Tarflon "A2200" (manufactured by Idemitsu Kosan Co., Ltd), or else can be used as the aromatic polycarbonate resin-A.
Examples of the aromatic dihydroxy compound as the raw material include 1,1'-biphenyl-4,4'-diol, bis(4-hydroxyphenyl)methane, 1,1-bis(4-hydroxyphenyl)ethane, bis(4-hydroxyphenyl)ether, bis(4-hydroxyphenyl)sulfoxide, bis(4-hydroxyphenyl)sulfide, bis(4-hydroxyphenyl)sulfone, bis(4-hydroxyphenyl)ketone, 2,2-bis(4-hydroxyphenyl)propane [=bisphenol A], 2,2-bis(4-hydroxy-3-tert-butylphenyl)propane, 2,2-bis(4-hydroxy-3-methylphenyl)propane [=bisphenol C], 1,1-bis(4-hydroxyphenyl)cyclopentane, 1,1-bis(4-hydroxyphenyl) cyclohexane [=bisphenol Z], 2,2-bis(4-hydroxyphenyl)hexafluoropropane, bis(4-hydroxyphenyl)diphenylmethane, 1,1-bis(4-hydroxyphenyl)-1-phenylethane, 9,9-bis(4-hydroxyphenyl)fluorene, 9,9-bis(4-hydroxy-3-methylphenyl)fluorene, $\alpha$, $\omega$-bis[2-(p-hydroxyphenyl)ethyl]polydimethylsiloxane, $\alpha,\omega$-bis[3-(o-hydroxyphenyl)propyl]polydimethylsiloxane and 4,4'-[1,3-phenylene bis(1-methylethylidene)]bisphenol, preferably bis(4-hydroxyphenyl)alkanes, and particularly preferably 2,2-bis(4-hydroxyphenyl)propane [bisphenol A] and 1,1-bis(4-hydroxyphenyl)cyclohexane [bisphenol Z]. These aromatic dihydroxy compounds may be used alone or two or more types of them can be used in a mixture. Furthermore, as a part of a dihydroxy compound, a compound in which one or more tetraalkylphosphonium sulfates are bound to the above-mentioned aromatic dihydroxy compound, a polymer or an oligomer having a siloxane structure containing phenolic OH groups at both ends, or the like may be used in combination.

In order to achieve a branched polycarbonate resin, a polyhydroxy compound such as phloroglucin, 4,6-dimethyl-2,4,6-tris(4-hydroxyphenyl)heptene-2,4,6-dimethyl-2,4,6-tris(4-hydroxyphenyl)heptane, 2,6-dimethyl-2,4,6-tris(4-hydroxyphenyl)heptene-3,1,3,5-tris(4-hydroxyphenyl)benzene or 1,1,1-tris(4-hydroxyphenyl)ethane, or 3,3-bis(4-hydroxyaryl)oxindole (=isatin bisphenol), 5-chlorisatin bisphenol, 5,7-dichlorisatin bisphenol, 5-bromisatin bisphenol may be used as a part of the above-described aromatic dihydroxy compound, where they are used in an amount of 0.01-10 mol%, preferably 0.1-3 mol%.

With respect to the reaction upon interfacial polymerization, while usual pH is kept at 10 or higher in the presence of a chlorinated organic solvent such as methylene chloride as an organic solvent inactive against the reaction and an aqueous alkaline solution, an aromatic dihydroxy compound, a molecular weight modifier (terminal stopping agent) and if necessary an antioxidant for preventing oxidation of the aromatic dihydroxy compound are used for reaction with phosgene, and then a polymerization catalyst such as tertiary amine or quaternary ammonium salt is added for interfacial polymerization, thereby obtaining a resin solution of a polycarbonate resin. Addition of the molecular weight regulator is not particularly limited as long as it is done during the period between the phosgenation and the initiation of the reaction. The reaction temperature is 0-35°C while the reaction time takes several minutes to several hours.

Examples of the molecular weight regulator or the terminal stopping agent include compounds having a monovalent phenolic hydroxyl group, specifically, m-methylphenol, p-methylphenol, m-propylphenol, p-propylphenol, p-tert-butylphenol and p-long-chain alkyl-substituted phenol. Examples of the polymerization catalyst include tertiary amines such as trimethylamine, triethylamine, tributylamine, tripropylamine, trihexylamine and pyridine; and quaternary ammonium salts such as trimethylbenzyl ammonium chloride, tetramethyl ammonium chloride and triethylbenzyl ammonium chloride.

A method for producing a resin solution of aromatic polycarbonate resin-A and a resin solution of aromatic polycarbonate resin-B according to the present invention may be a method in which the solutions are produced by dissolving resins in solid state in solvents, or a method in which resin solutions produced by interfacial polymerization are directly used.

Examples of the solvent for dissolving the solid-state resins include chlorinated hydrocarbons such as methylene chloride, chloroform and chlorobenzene, and aromatic hydrocarbons such as benzene, toluene and xylene. Above all, methylene chloride and chlorobenzene are particularly preferable.

The resin solutions of aromatic polycarbonate resin-A and aromatic polycarbonate resin-B according to the present invention are mixed by any method for mixing the solutions together, for example, a method in which resin solutions of polycarbonate resins are continuously mixed using a static mixer such as Static Mixer (trademark of Noritake Co., Limited), a method in which resin solutions at the middle of the process of the production of the polycarbonate resins are taken out and batch mixed while stirring, or a method in which polycarbonate resin powders obtained by any method are redissolved in solvents and the resulting resin solutions are batch mixed together while stirring, but it is preferably a method in which resin solutions at the middle of the process of production of the polycarbonate resins are continuously mixed using a static mixer.

Aromatic polycarbonate resin composition flakes produced according to a method for producing a polycarbonate resin composition of the present invention may be obtained, for example: by dropping a polycarbonate resin solution, i.e., a mixture of two types of polycarbonate resin solutions, into warm water kept at 45°C and then removing the solvent by evaporation; by putting the resin solutions into methanol, and filtrating and drying the precipitated polymer; or by agitating and pulverizing the polycarbonate resin solutions with a kneader while keeping the temperature at 40°C and then removing the solvent from the resultant with hot water at 95°C or higher.

If necessary, the resulting polycarbonate resin composition flakes may be converted into polycarbonate resin composition pellets, for example, by a well-known cold-cut process employing strand-cut (a method in which a once melted polycarbonate resin composition is extruded into strands, cooled and then cut into pellets with a predetermined shape), a hot-cut process employing in-air hot-cut (a method in which a once melted polycarbonate resin composition is cut into pellets in the air before the composition touches the water), a hot-cut process employing in-water hot-cut (a method in which a once melted polycarbonate resin composition is cut and cooled at the same time in water for pelletization). The resulting polycarbonate resin composition pellets are preferably dried by a process employing a hot air drying oven, a vacuum drying oven, or a dehumidifying drying oven as necessary.

A polycarbonate resin composition made into flakes may also be added, besides a flame retardant made of an alkali metal salt of organic sulfonic acid, with at least one type of additive selected from the group consisting of a thermostabilizer, an antioxidant, an ultraviolet absorbing agent, a mold release agent and a coloring agent. In addition, an antistatic agent, a fluorescent brightener, an antifog agent, a flow modifier, a plasticizer, a dispersant, an antibacterial agent or the like may also be added as long as the desired various physical properties are not markedly impaired.

Examples of the flame retardant made of an alkali metal salt of organic sulfonic acid include aliphatic sulfonate metal salts and aromatic sulfonate metal salts, which may be used alone or two or more types of them may be used in combination. Examples of alkali metals include sodium, lithium, potassium, rubidium and cesium. Examples of aliphatic sulfonates preferably include fluoroalkane-sulfonate metal salts, and more preferably perfluoroalkane-sulfonate metal salts. Examples of the fluoroalkane-sulfonate metal salts include alkali metal salts and more preferably alkali metal salts of fluoroalkane sulfonic acid having a carbon number of 4-8. Specific examples of fluoroalkane-sulfonate metal salts include sodium perfluorobutane-sulfonate, potassium perfluorobutane-sulfonate, sodium perfluoromethylbutane-sulfonate, potassium perfluoromethylbutane-sulfonate, sodium perfluorooctane-sulfonate and potassium perfluorooctane-sulfonate. In addition, examples of aromatic sulfonate metal salts includes alkali metal salts. Specific examples of the aromatic sulfonate alkali metal salts include sodium 3,4-dichlorobenzene sulfonate salt, sodium 2,4,5-trichlorobenzene sulfonate salt, sodium benzene sulfonate salt, sodium salt of diphenylsulfone-3-sulfonic acid, potassium salt of diphenylsulfone-3-sulfonic acid, sodium salt of 4,4'-dibromodiphenyl-sulfone-3-sulfonic acid, potassium salt of 4,4'-dibromophenyl-sulfone-3-sulfonic acid, disodium salt of diphenylsulfone-3,3'-disulfonic acid, dipotassium salt of diphenylsulfone-3,3'-disulfonic acid, sodium dodecylbenzene sulfonate salt and potassium dodecylbenzene sulfonate salt.

The % by mass of the flame retardant added relative to the total mass (100% by mass) of the aromatic polycarbonate resin-A and the aromatic polycarbonate resin-B is 0.005-0.1% by mass, preferably 0.01-0.1% by mass, and particularly preferably 0.03-0.1% by mass.

Here, examples of the thermostabilizer include phenolic, phosphoric and sulfuric thermostabilizers. Specific examples include oxyacids of phosphorus such as phosphoric acid, phosphonic acid, phosphorous acid, phosphinic acid and polyphosphoric acid; acid pyrophosphate metal salts such as sodium acid pyrophosphate, potassium acid pyrophosphate and calcium acid pyrophosphate; Group 1 and Group 10 metal phosphates such as potassium phosphate, sodium phosphate, cesium phosphate and zinc phosphate; and organic phosphate compounds, organic phosphite compounds and organic phosphonite compounds. Alternatively, examples may include at least one type selected from the group consisting of (a) a phosphite ester compound in which at least one ester in the molecule is esterified with phenol and/or phenol having at least one alkyl group with a carbon number of 1-25, (b) phosphorous acid and (c) tetrakis(2,4-di-tert-butylphenyl)-4,4'-biphenylene-di-phosphonite.

Examples of the organic phosphate include trimethyl phosphate, triethyl phosphate, tributyl phosphate, trioctyl phosphate, triphenyl phosphate, tricresyl phosphate, tris(nonylphenyl) phosphate, and 2-ethylphenyldiphenyl phosphate.

Specific examples of organic phosphite compounds include "ADK STAB 1178", "ADK STAB 2112" and "ADK STAB HP-10" (trade names) from ADEKA CORPORATION, "JP-351", "JP-360" and "JP-3CP" from Johoku Chemical, and "Irgafos 168" from BASF.

Specific examples of the phosphite ester compound (a) include trioctyl phosphite, trioctadecyl phosphite, tridecyl phosphite, trilauryl phosphite, tristearyl phosphite, triphenyl phosphite, tris(monononyl phenyl)phosphite, tris(monononyl/dinonyl phenyl) phosphite, trisnonylphenyl phosphite, tris(octylphenyl) phosphite, tris(2,4-di-tert-butylphenyl)phosphite, trinonyl phosphite, didecylmonophenyl phosphite, dioctyl monophenyl phosphite, diisopropyl monophenyl phosphite, monobutyl diphenyl phosphite, monodecyl diphenyl phosphite, bis(2,4-di-tert-butylphenyl)pentaerythritol phosphite, bis(2,6-di-tert-butyl-4-methylphenyl)pentaerythritol phosphite, monooctyl diphenyl phosphite, distearylpentaerythritol diphosphite, tricyclohexyl phosphite, diphenylpentaerythritol diphosphite, bis(2,6-di-tert-butyl-4-methylphenyl)pentaerythritol diphosphite, 2,2-methylene bis(4,6-di-tert-butylphenyl)octyl phosphite, bis(nonylphenyl)pentaerythritol diphosphite, bis(2,4-di-tert-butylphenyl)pentaerythritol diphosphite and bis(2,6-di-tert-butyl-4-ethylphenyl)pentaerythritol diphosphite. These may be used alone or two or more types of them may be used in a mixture.

The proportion of the thermostabilizer added relative to the total mass (100% by mass) of the aromatic polycarbonate resin-A and the aromatic polycarbonate resin-B is 0.001% by mass or more, preferably 0.01% by mass or more and more preferably 0.03% by mass or more, while 1% by mass or less, preferably 0.7% by mass or less, and more preferably 0.5% by mass or less. If the amount of the thermostabilizer is too small, the thermo stabilizing effect may be inadequate whereas if the amount of the thermostabilizer is too large, the effect may peak out which may not be cost-efficient.

Examples of the antioxidant include phenolic antioxidants, hindered phenolic antioxidants, bisphenolic antioxidants and polyphenolic antioxidants. Specifically, examples include 2,6-di-tert-butyl-4-methylphenol, tris(3,5-di-tert-butyl-4-hydroxybenzyl)isocyanurate, n-octadecyl-3-(3',5'-di-tert-butyl-4'-hydroxyphenyl) propionate, tetrakis[methylene-3-(3,5-di-tert-butyl-4-hydroxyphenyl)propionate]methane, 4,4'-butylidene bis-(3-methyl-6-tert-butylphenol), triethylene glycol-bis[3-(3-tert-butyl-4-hydroxy-5 -methylphenyl)propionate], 3 ,9-bis {2-[3-(3-tert-butyl-4-hydroxy-5 - methylphenyl)propionyloxy]-1,1-dimethylethyl}-2,4,8,10-tetraoxasprio[5,5]undecane, pentaerythritol tetrakis[3-(3,5-di-tert-butyl-4-hydroxyphenyl)propionate], thiodiethylene bis[3-(3,5-di-tert-butyl-4-hydroxyphenyl)propionate], N,N'-hexane-1,6-diyl bis[3-(3,5-di-tert-butyl-4-hydroxyphenyl propionamide), 2,4-dimethyl-6-(1-methyl pentadecyl)phenol, diethyl[[3,5-bis(1,1-dimethylethyl)-4-hydroxyphenyl]methyl]phosphate, 3,3',3",5,5',5"-hexa-tert-butyl-a,a',a"-(mesitylene-2,4,6-triyl)tri-p-cresol, 4,6-bis(octylthiomethyl)-o-cresol, ethylene bis(oxyethylene) bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6 (1H,3H,5H)-trione, and 2,6-di-tert-butyl-4-(4,6-bis(octylthio)-1,3,5-triazine-2-ylamino)phenol. Specific examples of the phenolic antioxidant include "Irganox 1010" (registered trademark, the same applies hereinafter) and "Irganox 1076" manufactured by BASF, and "ADK STAB AO-50" and "ADK STAB AO-60" manufactured by ADEKA CORPORATION.

The proportion of the antioxidant added relative to the total mass (100% by mass) of the aromatic polycarbonate resin-A and the aromatic polycarbonate resin-B is 0.001% by mass or more and preferably 0.01% by mass or more while 1% by mass or less and preferably 0.5% by mass or less. If the proportion of the antioxidant added is less than the lower limit, the effect as an antioxidant may possibly be inadequate whereas if the proportion of the antioxidant added exceeds the upper limit, the effect may peak out which may not be cost-efficient.

Besides inorganic ultraviolet absorbing agents such as cerium oxide and zinc oxide, examples of the ultraviolet absorbing agent include organic ultraviolet absorbing agents such as benzotriazole compounds, benzophenone compounds, salicylate compounds, cyanoacrylate compounds, triazine compounds, oxanilide compounds, malonate compounds, hindered amine compounds and phenyl salicylate compounds. Above all, organic benzotriazole or benzophenone ultraviolet absorbing agents are preferable. In particular, specific examples of the benzotriazole compound include 2-(2'-hydroxy-5'-methylphenyl)benzotriazole, 2-[2'-hydroxy-3',5'-bis($\alpha,\alpha$-dimethylbenzyl)phenyl]-benzotriazole, 2-(2'-hydroxy-3',5'-di-tert-butyl-phenyl)-benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole), 2-(2'-hydroxy-3',5'-di-tert-amyl)-benzotriazole, 2-(2'-hydroxy-5'-tert-octylphenyl)benzotriazole, 2,2'-methylene bis[4-(1,1,3,3-tetramethylbutyl)-6-(2N-benzotriazole-2-yl)phenol], 2-(4,6-diphenyl-1,3,5-triazine-2-yl)-5-[(hexyl)oxy]-phenol, 2-[4,6-bis(2,4-dimethylphenyl)-1,3,5-triazine-2-yl]-5-(octyloxy)phenol, 2,2'-(1,4-phenylene) bis[4H-3,1-benzoxazine-4-one], [(4-methoxyphenyl)-methylene]-propanedioic acid-dimethylester, 2-(2H-benzotriazole-2-yl)-p-cresol, 2-(2H-benzotriazole-2-yl)-4,6-bis(1-methyl-1-phenylmethyl)phenol, 2-[5-chloro (2H)-benzotriazole-2-yl]-4-methyl-6-(tert-butyl)phenol, 2,4-di-tert-butyl-6-(5-chlorobenzotriazole-2-yl)phenol, 2-(2H-benzotriazole-2-yl)-4-(1,1,3,3-tetrabutyl)phenol, 2,2'-methylene bis[6-(2H-benzotriazole-2-yl)-4-(1,1,3,3-tetrabutyl)phenol], and [methyl-3-[3-tert-butyl-5-(2H-benzotriazole-2-yl)-4-hydroxyphenyl]propionate-polyethylene glycol]condensate. Two or more types of them can be used in combination. Above all, 2-(2'-hydroxy-5'-tert-octylphenyl) benzotriazole, 2,2'-methylene-bis[4-(1,1,3,3-tetramethylbutyl)-6-(2N-benzotriazole2-yl)phenol] is preferable. Moreover, specific examples of benzophenone ultraviolet absorbing agents include 2,4-dihydroxy-benzophenone, 2-hydroxy-4-methoxy-benzophenone, 2-hydroxy-4-n-octoxy-benzophenone, 2-hydroxy-4-dodecyloxy-benzophenone, 2-hydroxy-4-octadecyloxy-benzophenone, 2,2'-dihydroxy-4-methoxy-benzophenone, 2,2'-dihydroxy-4,4'-dimethoxy-benzophenone and 2,2',4,4'-tetrahydroxy-benzophenone. In addition, specific examples of the phenyl salicylate ultraviolet absorbing agent include phenylsalicylate and 4-tert-butyl-phenylsalicylate. Specific examples of the triazine ultraviolet absorbing agent include 2-(4,6-diphenyl-1,3,5-triazine-2-yl)-5-[(hexyl)oxy]-phenol and 2-[4,6-bis(2,4-dimethylphenyl)-1,3,5-triazine-2-yl]-5-(octyloxy)phenol. A specific example of the hindered amine ultraviolet absorbing agent includes bis(2,2,6,6-tetramethylpiperidine-4-yl)sebacate.

The proportion of the ultraviolet absorbing agent added relative to the total mass (100% by mass) of the aromatic polycarbonate resin-A and the aromatic polycarbonate resin-B is 0.01% by mass or more and preferably 0.1% by mass or more while 3% by mass or less and preferably 1% by mass or less. If the proportion of the ultraviolet absorbing agent added is less than the lower limit, the effect of improving the weather resistance may be inadequate whereas if the proportion of the ultraviolet absorbing agent added exceeds the upper limit, mold deposit and the like may occur which may cause mold contamination.

Examples of the mold release agent include mold release agents such as carboxylate ester, polysiloxane compounds and paraffin wax (polyolefin-based). Specifically, examples include at least one type of compound selected from the group consisting of aliphatic carboxylic acids, esters of aliphatic carboxylic acid and alcohol, aliphatic hydrocarbon compounds with a number-average molecular weight of 200-15,000, and polysiloxane silicone oil. Examples of aliphatic carboxylic acids include saturated or unsaturated aliphatic monovalent, divalent or trivalent carboxylic acids. Herein, the aliphatic carboxylic acids also comprise alicyclic carboxylic acids. Among these, aliphatic carboxylic acids are preferably monovalent or divalent carboxylic acids with a carbon number of 6-36, and aliphatic carboxylic acids are more preferably aliphatic saturated monovalent carboxylic acids with a carbon number of 6-36. Specific examples of aliphatic carboxylic acids include palmitic acid, stearic acid, valeric acid, caproic acid, capric acid, lauric acid, arachic acid, behenic acid, lignoceric acid, cerotic acid, melissic acid, tetratriacontanoic acid, montanic acid, glutaric acid, adipic acid and azelaic acid. As the aliphatic carboxylic acid in the esters of aliphatic carboxylic acid and alcohol, the same aliphatic carboxylic acids recited above can be used. Meanwhile, examples of the alcohol include saturated or unsaturated monovalent or polyvalent alcohols. These alcohols may have a substituent such as a fluorine atom or an aryl group. Among them, monovalent or polyvalent saturated alcohols having a carbon number of 30 or less are preferable, and aliphatic saturated monovalent alcohols or polyvalent alcohols having a carbon number of 30 or less are more preferable. Herein, aliphatic also comprises alicyclic compounds. Specific examples of alcohols include octanol, decanol, dodecanol, stearyl alcohol, behenyl alcohol, ethylene glycol, diethylene glycol, glycerin, pentaerythritol, 2,2-dihydroxy perfluoropropanol, neopentylene glycol, ditrimethylolpropane and dipentaerythritol. The above-mentioned ester compounds may contain aliphatic carboxylic acid and/or alcohol as impurities, and may be a mixture of multiple compounds. Specific examples of the esters of aliphatic carboxylic acid and alcohol include beeswax (a mixture consisting mainly of myricyl palmitate), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate and pentaerythritol tetrastearate. Examples of aliphatic hydrocarbons having a number-average molecular weight of 200-15,000 include liquid paraffin, paraffin wax, microcrystalline wax, polyethylene wax, Fischer-Tropsch wax and $\alpha$-olefin oligomers having a carbon number of 3-12. Herein, the aliphatic hydrocarbons also comprise alicyclic hydrocarbons. Moreover, these hydrocarbon compounds may partially be oxidized. Among them, partially oxidized products of paraffin wax, polyethylene wax and polyethylene wax are preferable, while paraffin wax and polyethylene wax are more preferable. The number-average molecular weight is preferably 200-5000. These aliphatic hydrocarbons may be a single substance or a mixture of those with various constituents or various molecular weights as long as the main component stays within the above-mentioned range. Examples of the polysiloxane silicone oil include dimethyl silicone oil, phenylmethyl silicone oil, diphenyl silicone oil and fluorinated alkyl silicone. Two or more types of them may be used in combination. The proportion of the mold release agent added relative to the total mass (100% by mass) of the aromatic polycarbonate resin-A and the aromatic polycarbonate resin-B is preferably 0.001% by mass or more and more preferably 0.01% by mass or more while 2% by mass or less and more preferably 1% by mass or less. If the proportion of the mold release agent added is less than the lower limit, the effect of the mold release property may not be adequate, whereas if the proportion of the mold release agent added exceeds the upper limit, decrease in the hydrolysis resistance, mold contamination upon injection molding and the like may be caused.

Examples of stain pigments as the coloring agents include inorganic pigments, organic pigments and organic dyes. Examples of inorganic pigments include sulfide pigments such as carbon black, cadmium red and cadmium yellow; silicate pigments such as ultramarine; oxide pigments such as titanium oxide, Chinese white, Bengal red, chromium oxide, iron black, titan yellow, zinc-iron brown, titanium cobalt green, cobalt green, cobalt blue, copper-chrome black and copper-iron black; chromate pigments such as chrome yellow and molybdate orange; and ferrocyanide pigments such as prussian blue. Moreover, examples of organic pigments and organic dyes as the coloring agents include phthalocyanine stain pigments such as copper phthalocyanine blue and copper phthalocyanine green; azo stain pigments such as nickel azo yellow; polycyclic condensation stain pigments such as those from the thioindigo, perinone, perylene, quinacridone, dioxazine, isoindolinone and quinophthalone series; and quinoline, anthraquinone, heterocyclic and methyl stain pigments. Among them, titanium oxide, carbon black, cyanine, quinoline, anthraquinone and phthalocyanine stain pigments or the like are preferable in terms of heat stability. One type of stain pigment may be contained or two or more types of stain pigments may be contained in any combination at any proportion. Moreover, for the purpose of improving handling property upon extrusion or improving dispersibility in the resin composition, the stain pigment may be made into a masterbatch with a polystyrene resin, a polycarbonate resin or an acrylic resin. The proportion of the coloring agent added relative to the total mass (100% by mass) of the aromatic polycarbonate resin-A and the aromatic polycarbonate resin-B is 5% by mass or less, preferably 3% by mass or less, and more preferably 2% by mass or less. If the proportion of the coloring agent added is too large, the impact resistance may possibly be inadequate.

An aromatic polycarbonate resin composition according to the present invention contains diffuser microparticles having an average particle size of 1-4 $\mu$m as measured by Coulter Counter method within a region with diameter of 0.4-12 $\mu$m. Hereinafter, the term is also referred to as "diffuser microparticles" for the sake of simplification.

The diffuser microparticles are components that may contribute to improvement in light diffusion, and are selected from the group consisting of polyorganosilsesquioxane microparticles and (meth)acrylic resin microparticles.

As the diffuser microparticles: one type or two or more types of polyorganosilsesquioxane microparticles may be used; one type or two or more types of (meth)acrylic resin microparticles may be used; or polyorganosilsesquioxane microparticles and (meth)acrylic resin microparticles may be used in combination.

Hereinafter, the diffuser microparticles will be described in more detail.

[Polyorganosilsesquioxane microparticles]

In one embodiment, the diffuser microparticles are polyorganosilsesquioxane microparticles. The polyorganosilsesquioxane microparticles according to the present invention refer to microparticles comprising polyorganosiloxane having trifunctional

siloxane units (hereinafter, also referred to as "T units") represented by $RSiO_{1.5}$ (wherein R is a monovalent organic group) as the main component, wherein T units are 50 mol% or more among the total siloxane units, i.e., 100 mol%. The proportion of the T units is more preferably 80 mol% or more, still more preferably 90 mol% or more, particularly preferably 95 mol% or more, and most preferably 100 mol%. The polyorganosilsesquioxane microparticles are favorable since they are highly heat resistant and their particle sizes can easily be controlled to have suitable sizes.

The polyorganosilsesquioxane microparticles used with the present invention may also contain, in addition to the above-described T units, monofunctional siloxane units (hereinafter, also referred to as "M units") represented by $R_3SiO_{0.5}$ (wherein R is a monovalent organic group). Use of the polyorganosilsesquioxane microparticles containing M units has the advantages of enhancing the heat resistance of the microparticles themselves, making the hue of the aromatic polycarbonate resin composition of the present invention favorable, enhancing dispersibility in the resin component of the present invention, and facilitating the acquirement of an aromatic polycarbonate resin composition with uniform optical performance.

Furthermore, the above-mentioned polyorganosiloxane may have bifunctional siloxane units represented by $R_2SiO_{2.0}$ (wherein R is a monovalent organic group).

Preferably, examples of organic group R contained in polyorganosilsesquioxane include alkyl groups with a carbon atom number of 1-20 such as a methyl group, an ethyl group, a propyl group, a butyl group, a hexyl group, a decyl group, a dodecyl group and an octadecyl group; cyclic alkyl groups such as a cyclohexyl group; aryl groups such as a phenyl group, a tolyl group and a xylyl group; and aralkyl groups such as a phenylethyl group and a phenylpropyl group. Among them, polyalkyl silsesquioxane wherein R is an alkyl group with a carbon atom number of 1-20 is preferable since the difference of the refractive index from that of the resin matrix formed with the aromatic polycarbonate resin component is large, and thus is likely to enhance the diffusion effect and further likely to enhance the heat resistance. In particular, polymethylsilsesquioxane is preferable.

According to the present invention, the particle sizes and the particle size distribution are measured by Coulter Counter method. According to Coulter Counter method, an electrolyte having sample particles suspended therein are allowed to pass through pores (apertures), upon which the change in the voltage pulse generated proportional to the volumes of the particles is read to quantify the particle sizes. In addition, the voltage pulse height may be measured and processed one by one so as to obtain a histogram of the volume distribution of the sample particles. Such measurements of the particle sizes or the particle size distribution by Coulter Counter method are those that are most commonly used in the form of a grain size distribution measurement device.

According to the present invention, the measurement of the particle sizes of the polyorganosilsesquioxane microparticles is defined by carrying out the measurement within a region with a diameter of 0.4-12 $\mu$m so as to remove the influence from extremely small microparticles and extremely large maximum particles and obtain highly reliable and highly reproducible data.

While the polyorganosilsesquioxane microparticles used with the present invention may preferably have a unimodal or bimodal particle size distribution, a particularly preferable particle size distribution has two or more multiple peaks with an average particle size of 1-4 $\mu$m while the maximum peak and the second maximum peak of the particle size distribution preferably both stay within a range of 1-4 $\mu$m. Use of the particles whose average particle size is 1-4 $\mu$m and whose maximum peak (hereinafter, also referred to as "P1") and second maximum peak (hereinafter, also referred to as "P2") stay within a range of particle sizes of 1-4 $\mu$m can particularly improve the light diffusion ratio and the dispersion degree.

In a case where the average particle size of the polyorganosilsesquioxane microparticles is less than 1 $\mu$m, not only the light diffusion of the resulting aromatic polycarbonate resin composition cannot be enhanced but also the brightness is likely to be significantly decreased. On the other hand, in a case where the average particle size exceeds 4 $\mu$m, the light diffusion effect is decreased and the brightness is likely to be significantly decreased.

Moreover, the number-based frequency (%) of the polyorganosilsesquioxane microparticles within a particle size range of 0.5-1 $\mu$m is preferably 0.1-8% while the volume-based frequency (%) within a particle size range of 4-11 $\mu$m is preferably 0.05-2.5%. In this manner, by making the proportion of the particles with particle sizes of 0.5-1 $\mu$m to lie within the above-mentioned range and by making the proportion of the particles with particle sizes of 4-11 $\mu$m to lie within the above-mentioned range, the light diffusion effect and the transmittance can further be improved while the impact resistance is likely to be improved as well.

Furthermore, with respect to the polyorganosilsesquioxane microparticles used with the present invention, the proportion of the second maximum peak (P2) to the maximum peak (PI) described above (P2/P1) is preferably 0.2-0.95 and particularly preferably 0.2-0.8. If P2/P1 lies within this range, the diffusion effect and the transmittance can further be improved. If P2/P1 is less than 0.2, the dispersion degree which is a particularly essential property as a lighting part is likely to be decreased, whereas the dispersion degree is further increased when P2/P1 is 0.95 or less. In this manner, the dispersibility in a resin component can specifically be enhanced by containing polyorganosilsesquioxane microparticles having two or more peaks in suitable proportions, thereby efficiently enhancing diffusion capability.

Methods for producing favorable polyorganosilsesquioxane microparticles such as those described above are known. For example, it may be a method in which organotrialkoxy silane is hydrolyzed under acidic conditions, then an aqueous alkaline solution is added to and mixed with a water/alcohol solution of organosilane triol and the resultant is left to stand to allow polycondensation of the organosilane triol as described in Japanese Patent Laid-opne Publication No. H01-217039.

The particle size can be adjusted mainly through adjustment of pH of the aqueous alkaline solution, where smaller particles can be obtained by increasing pH and larger particles can be obtained by decreasing pH, thereby controlling the particle size. In general, the polycondensation reaction is carried out within 0.5-10 hours, preferably 0.5-5 hours, after the addition of the aqueous alkaline solution, whereby the condensate is allowed to mature. Meanwhile, stirring during the maturation can be made gentle so that the particles are prevented from aggregating, thereby adjusting the particle sizes and the particle size distribution. In addition, the resulting polyorganosilsesquioxane microparticles can further be ground so as to adjust the grain sizes. The polyorganosilsesquioxane microparticles are also available from manufacturers thereof by specifying the specifications of desired particle sizes and distribution.

According to the present invention, a single type of polyorganosilsesquioxane microparticles may be used alone or two or more types of them can be used in combination. For example, two or more types of polyorganosilsesquioxane microparticles made from different polyorganosilsesquioxanes may be used in combination or two or more types of polyorganosilsesquioxane microparticles having different average particle sizes or particle size distributions may be used in combination. In either case, when two or more types of polyorganosilsesquioxane microparticles are used, the mixture thereof preferably satisfy the above-described average particle sizes and particle size distribution.

The content of the polyorganosilsesquioxane microparticles in an aromatic polycarbonate resin composition of the present invention relative to the total mass (100% by mass) of the aromatic polycarbonate resin-A and the aromatic polycarbonate resin-B is preferably 0.01-10% by mass, more preferably 0.01-5% by mass, still more preferably 0.1-3% by mass, and particularly preferably 0.3-2% by mass. If the proportion of the content of the polyorganosilsesquioxane microparticles is less than 0.01% by mass, the effect of improving the transmittance and the light diffusion will be inadequate whereas if the proportion of the content of the polyorganosilsesquioxane microparticles exceeds 10% by mass, the transmittance may be decreased or the impact resistance or the like is likely to be decreased, which is not favorable. In terms of maintaining the transmittance, the impact resistance and the like, the proportion of the content of the polyorganosilsesquioxane microparticles is preferably 5% by mass or less.

[(Meth)acrylic resin microparticles]

Another embodiment of the diffuser microparticles is (meth)acrylic resin microparticles. As the (meth)acrylic resin microparticles, polymer or copolymer microparticles using (meth)acrylic monomers may be used. Examples of the (meth)acrylic (co)polymers include polymers of methyl methacrylate, methyl acrylate, ethyl acrylate and cyclohexyl methacrylate as well as copolymers containing repeat units derived from these (meth)acrylic monomers.

Particularly preferable (meth)acrylic resin microparticles used with the present invention are copolymer microparticles of non-cross linking (meth)acrylic monomers and crosslinking monomers. Specifically, (meth)acrylic resin microparticles produced by suspension polymerization are favorable, and copolymer microparticles of non-crosslinking (meth)acrylic monomers and crosslinking monomers produced by suspension polymerization are particularly favorable.

Examples of the above-mentioned non-crosslinking (meth)acrylic monomers include acrylic acid esters such as methyl acrylate, n-butyl acrylate, ethyl acrylate, propyl acrylate, butyl acrylate and 2-ethyl-hexyl acrylate; and methacrylic acid esters such as methyl methacrylate, ethyl methacrylate, propyl methacrylate and butyl methacrylate, which may be used alone or two or more types of them may be used in combination. Among them, methyl methacrylate is preferably used. Specifically, (meth)acrylic resin microparticles are preferably polymethyl methacrylate microparticles.

As the above-mentioned crosslinking monomer, a compound having two or more unsaturated bonds within the molecule is preferably used. Examples include trimethylolpropanetri(meth)acrylate, allyl methacrylate, triallyl cyanurate, triallyl isocyanate, ethylene glycol dimethacrylate, propylene glycol diallyl ether, divinylbenzene, diethylene glycol dimethacrylate and 1,6-hexanediol dimethacrylate. They may be used alone or two or more types of them may be used in combination. Among them, trimethylolpropanetri(meth)acrylate is preferable.

As the copolymer component other than the non-crosslinking (meth)acrylic monomers and the crosslinking monomers, monomers that can copolymerize with these monomers can be used in combination. Examples of such monomers include one or two or more types of monomers having vinyl groups such as styrene, $\alpha$-methylstyrene and vinyl acetate.

The (meth)acrylic resin microparticles may be produced through suspension polymerization of a non-crosslinking (meth)acrylic monomer, a crosslinking monomer and other copolymerizable monomer used as necessary. For example, these monomers are suspended using polyvinyl alcohol as a dispersant to result polymerization, and the resultant is subjected to filtration, washing, sieving and drying, thereby producing the (meth)acrylic resin microparticles.

The proportions of the non-crosslinking (meth)acrylic monomer and the crosslinking monomer used upon production of the (meth)acrylic resin microparticles are preferably 90-99% by mass and 10-1% by mass, respectively (provided that the sum of the non-crosslinking (meth)acrylic monomer and the crosslinking monomer is 100% by mass). If the amount of the crosslinking monomer is too small, the dispersibility of the resulting bead-like crosslinking (meth)acrylic resin microparticles in a resin component would be poor whereas if the combination ratio of the crosslinking monomer is too large, the (meth)acrylic resin microparticles will be too hard which is unfavorable due to the decrease in the impact strength.

Preferably, the (meth)acrylic resin microparticles used with the present invention are acrylic resin microparticles having an average particle size within a predetermined region and having a predetermined particle size distribution, where the number-based particle sizes within a region with a diameter of 0.4-12 $\mu$m as measured by Coulter Counter method satisfy the following conditions (I)-(III).

(I) The average particle size is 1-4 $\mu$m.
(II) The proportion of the particles having the particle sizes of 1 $\mu$m to less than 2 $\mu$m, the proportion of the particles having the particle sizes of 2 $\mu$m to less than 3 $\mu$m, and the proportion of the particles having the particle sizes of 3 $\mu$m or more are each within a range of 20-40%.
(III) Particles having the particle sizes of 10 $\mu$m or more are substantially not contained.

The phrase "proportion of particles" in (II) above refers to the proportion of the particles, given that the total number within a region with a diameter of 0.4-12 $\mu$m is 100%, which may also be referred to as "number-based frequency".

Specifically, according to the present invention, (meth)acrylic resin microparticles are preferably particles having an average particle size of 1-4 $\mu$m which is smaller than the average particle size of 6-10 $\mu$m of those that have been generally used, and further having a broad particle size distribution that satisfies condition (II) above contrary to the conventionally common knowledge where monodispersity was said to be favorable.

According to the present invention, the particle sizes and the particle size distribution are measured by Coulter Counter method based on the number as described above. According to the present invention, measurement of the particle sizes of the (meth)acrylic resin microparticles is defined to be carried out by measuring within a region with a diameter of 0.4-12 $\mu$m so as to exclude influences from the extremely small microparticles and the extremely large microparticles, thereby acquiring highly reliable and highly reproducible data. Moreover, the average particle size refers to a number-based average particle size.

Preferably, the (meth)acrylic resin microparticles used with the present invention satisfy condition (I) above, i.e., the average particle size is 1-4 $\mu$m. An average particle size within the above-described range will result sufficiently high light diffusion ratio and dispersion degree. The average particle size of the (meth)acrylic resin microparticles are more preferably 1-3 $\mu$m and particularly preferably 1.5-3 $\mu$m.

Furthermore, the (meth)acrylic resin microparticles preferably satisfy condition (III) above, i.e., particles having particle sizes of 10 $\mu$m or more (more preferably, 8 $\mu$m or more) are substantially not contained. When particles having particle sizes of 10 $\mu$m or more are contained, the impact resistance which is a particularly essential property as a lighting part decreases.

The phrase "substantially not contained" as used in the expression "particles having particle sizes of 10 $\mu$m or more are substantially not contained" means not only that particles having the defined particle sizes are not contained at all but it can also mean that such particles are not detected by the above-described grain size distribution measurement device.

The (meth)acrylic resin microparticles having the above-described average particle size and particle size distribution can be produced by various methods, and the production method is not particularly limited. Methods in which particles having such average particle size and particle size distribution are directly produced by polymerization such as an emulsion polymerization process or a suspension polymerization process are also preferable. In the case where (meth)acrylic resin microparticles are directly produced by polymerization, the particle sizes thereof can be controlled according to polymerization conditions. For example, a homogenizer can be used to achieve a polymer with predetermined particle sizes while a broad particle size distribution thereof can be realized by not applying excessive shear force.

Alternatively, a (meth)acrylic resin obtained in a solid state can be used by grinding it with a grinding machine such as a jet stream type grinder, a mechanical impact type grinder, a roll mill, a hammer mill or an impeller breaker, and introducing the resulting ground product into a classifier such as a wind-force classifier or a sieve classifier for classification to control the particle sizes of the particles.

Alternatively, microparticles used can be selected from various commercially known (meth)acrylic resin microparticles.

According to the present invention, a single type of (meth)acrylic resin microparticles may used alone or two or more types of them can be used as a mixture. For example, two or more types of (meth)acrylic resin microparticles of different resin materials can be used in combination, or two or more types of (meth)acrylic resin microparticles having different average particle sizes or different particle size distributions can be used in combination. In either case, the mixture of the two or more types of (meth)acrylic resin microparticles preferably satisfies conditions (I)-(III) above.

In an aromatic polycarbonate resin composition of the present invention, the content of the (meth)acrylic resin microparticles relative to the total mass (100% by mass) of the aromatic polycarbonate resin-A and the aromatic polycarbonate resin-B is preferably 0.01-10% by mass, more preferably 0.1-10% by mass, still more preferably 0.3-5% by mass and particularly preferably 0.5-2% by mass. If the proportion of the (meth)acrylic resin microparticles contained is less than 0.01% by mass, the effect of improving the transmittance and the light diffusion may be inadequate. In order to improve the transmittance and the light diffusion, the (meth)acrylic resin microparticles are preferably contained for 0.1% by mass or more. On the other hand, if the proportion of the (meth)acrylic resin microparticles contained exceed 10% by mass, the impact resistance or else is likely to be decreased, which is unfavorable.

A polycarbonate resin composition produced according to a method for producing a polycarbonate resin composition of the present invention may also contain resins other than the polycarbonate resin as necessary as long as the desired physical properties are not significantly impaired. Here, examples of such resins include thermoplastic polyester resins such as polyethylene terephthalate resin (PET resin), polytrimethylene terephthalate (PTT resin) and polybutylene terephthalate resin (PBT resin); styrene resins such as polystyrene resin (PS resin), high-impact polystyrene resin (HIPS), acrylonitrile-styrene copolymer (AS resin) and methyl methacrylate-styrene copolymer (MS resin); elastomers such as core-shell elastomers, e.g., methyl methacrylate-acrylic rubber-styrene copolymer (MAS), and polyester elastomers; polyolefin resins such as cyclic cycloolefin resin (COP resin) and cyclic cycloolefin (COP) copolymer resin; polyamide resin (PA resin); polyimide resin (PI resin); polyetherimide resin (PEI resin); polyurethane resin (PU resin); polyphenylene ether resin (PPE resin); polyphenylene sulfide resin (PPS resin); polysulfone resin (PSU resin); polymethacrylate resin (PMMA resin); and polycaprolactone.

In an aromatic polycarbonate resin composition of the present invention, fluidity can be evaluated based on Q value. Q value can be acquired by drying the pellets obtained, for example, by the methods described in the following examples at 120°C for 4 hours or longer, and then by measuring the outflow of the polycarbonate resin composition per unit time (units: x $10^{-2}$ cm$^3$/sec) under the conditions of 280°C and a load of 1.57 x $10^7$ Pa (160 kgf/cm$^2$) using Koka flow tester (high-load-type flow tester) (manufactured by Shimadzu Corporation). The orifice used here has a diameter of 1 mm x length of 10 mm. A measurement method using Koka flow tester is illustrated in "Plastics, Vol. 52, No. 9, pages 96-103". In Table 2 shown below, the results are indicated as "fluidity". One can say that a higher Q value represents better fluidity of the polycarbonate resin composition. According to the present invention, the Q value is preferably 0.01-0.1 cm$^3$/sec, more preferably 0.03-0.09 cm$^3$/sec, and particularly preferably 0.06-0.08 cm$^3$/sec.

Evaluation of flame retardancy of a polycarbonate resin composition is carried out by conditioning humidity of, for example, test specimens for UL test obtained by the methods described in the examples below in a constant temperature room at a temperature of 23°C and at a relative humidity of 50% for 48 hours in accordance with UL94 tests established by US Underwriters Laboratories (UL) (Tests for Flammability of Plastic Materials for Parts in Devices and Appliances). UL94V refers to a method for evaluating flame retardancy based on the lingering flame time and the dripping property of a vertically-retained test specimen with a predetermined size after it is exposed to a burner flame for 10 seconds, while the criteria shown in Table 1 below need to be satisfied to prove the flame retardancy of V-0, V-1 and V-2.

[Table 1]

|  | V-0 | V-1 | V-2 |
|---|---|---|---|
| Lingering flame time of each specimen | 10 seconds or shorter | 30 seconds or shorter | 30 seconds or shorter |
| Total lingering flame time of five specimens | 50 seconds or shorter | 250 seconds or shorter | 250 seconds or shorter |
| Cotton ignited by flaming drips | Not ignited | Not ignited | Ignited |

Herein, lingering flame time refers to duration of flaming combustion of the test specimen after keeping the ignition source away from the test specimen. The cotton ignited by drips is determined by whether or not the cotton as an indicator placed about 300 mm below the lower end of the test specimen is ignited by the drips from the specimen. In Table 2 shown below, this is indicated as "flame retardancy".

A viscosity-average molecular weight (Mv) was calculated according to the following formula by measuring a methylene chloride solution of a polycarbonate resin at 0.2 grams/deciliters with an Ubbelohde capillary viscometer at a temperature of 20°C and determining the intrinsic viscosity [η] deciliters/gram at Huggings constant of 0.45.

$$\eta = 1.23 \text{ x } 10^{-4} \text{ x } Mv^{0.83}$$

Measurement of a haze value for evaluating transparency is carried out in accordance with JIS K-7136 "Determination of haze for plastic/transparent material". For example, a 5 cm x 3 cm part with a thickness of 3 mm of the triple-stage plates (thicknesses of 1, 2 and 3 mm) produced by the method described in the example below was used as a test specimen and subjected to measurement using NDH-2000 turbidimeter manufactured by Nippon Denshoku Industries. Haze was used as a scale of white turbidity of the resin, where a lower value indicates higher and thus more preferable transparency. In Table 2 shown below, this is indicated as "transparency".

Unmelted pieces remaining in a molded article obtained from a polycarbonate resin composition are synonymous with the unmelted transparent foreign matters described in Patent Document 4 (Japanese Patent No. 4881560) mentioned above, and refer to those as described in paragraph 0016 of Patent Document 4 as follows: "according to the present invention, the transparent foreign matters refer to the unmelted pieces of the aromatic polycarbonate resin contained in the product (molded article), and refer to transparent matters with unspecified shapes that can be confirmed with a transmission-type microscope at the interface between the sufficiently melted part and the unmelted part in the product due to slightly different refractive indexes or slightly different states of the transmitted light".

The number of unmelted polycarbonate pieces having long diameters of 100 $\mu$m or longer existing within the region of 5 cm x 3 cm of the 3 mm-thick part of the triple-stage plates used for the haze value measurement is counted with a microscope.

In addition, the haze value of a 3.0 mm-thick plate-like molded article molded from an aromatic polycarbonate resin composition produced by a method for producing a polycarbonate resin composition of the present invention is 2% or lower, preferably 1.5% or lower and more preferably 1.0% or lower. Moreover, the number of unmelted polycarbonate pieces having long diameters of 100 $\mu$m or longer in the 5 cm x 3 cm x 3 mm flat-plate test specimen is preferably 10 or less and more preferably 5 or less.

A molded article of the present invention for accomplishing the above-described objectives is a molded article molded from an aromatic polycarbonate resin composition produced by a method for producing a polycarbonate resin composition of the present invention comprising the above-described various preferable embodiments and structures. The shape, pattern, color, dimensions and the like of the molded article are not particularly limited and may arbitrarily be determined according to the usage thereof. Specific examples of the molded article include electric and electronic equipments, office automation equipments, information terminal equipments, machinery parts, home electric appliances, vehicle components, building components, various containers, leisure goods/sundries, parts of lighting instruments or the like, parts of various home electrical products or the like, housings, containers, covers, compartments or cases of electrical apparatuses, and covers or cases of lighting apparatuses. Examples of the electric and electronic equipments include personal computers, game machines, television receivers, display devices such as liquid crystal display devices and plasma display devices, printers, copy machines, scanners, fax machines, electronic organizers, PDA, electronic desktop calculators, electronic dictionaries, cameras, video cameras, cellular phones, cell packs, drives and readout devices for storage media, mouse, numeric keypads, CD players, MD players and portable radios/audio players. Alternatively, examples of the molded article include electric signboards, liquid crystal backlights, illumination displays, traffic signs, signboards, screens, vehicle components such as light reflectors and meter parts, toys and accessories.

The method for producing a molded article is not particularly limited and any molding method generally used for polycarbonate resin compositions can be employed. Examples include injection molding methods, ultrahigh-speed injection molding methods, injection compression molding methods, two-color molding methods, blow molding methods such as gas assisted molding, molding methods using a heat insulating mold, molding methods using a rapid heating mold, foam molding (including supercritical fluid), insert molding, IMC (in-mold coating) molding methods, extrusion molding methods, sheet molding methods, heat molding methods, rotational molding methods, lamination molding methods and press molding methods. In addition, a molding method that uses a hot runner system can also be used.

EXAMPLES

Hereinafter, the present invention will be described by means of examples although the present invention should not be limited to these examples and the variety of numerical values and materials in the examples are illustrative. According to the present invention, addition of a mold release agent is not requisite. Although it is required upon molding fabrication, it is not essential for the invention.

As aromatic polycarbonate resins, aromatic polycarbonate resins (PC-1 to PC-9) shown in Table 2 below were used. Among them, PC-2 is Iupilon S-3000F (viscosity-average molecular weight of 21,000) manufactured by Mitsubishi Engineering-Plastics Corporation and PC-8 is Iupilon K-4000F (viscosity-average molecular weight of 39,000) manufactured by Mitsubishi Engineering-Plastics Corporation.

PC-1 as an aromatic polycarbonate resin-A was synthesized according to a method described below.

To 30 liters of a 5% by mass aqueous sodium hydroxide solution, 6.000 kilograms (26.316 mol) of bisphenol A manufactured by Nippon Steel & Sumikin Chemical Co., Ltd. and 30 grams of hydrosulfite were dissolved. To this, 10 liters of methylene chloride was added, and 3.0 kilograms (30.303 mol) of phosgene was infused for 20 minutes while stirring and keeping the temperature at 15°C. At the end of the infusion of phosgene, 243.0 grams of p-tert-butylphenol manufactured by DIC Corporation was added as a molecular weight regulator, and 10 liters of a 5% by mass aqueous sodium hydroxide solution and 12 liters of methylene chloride were further added and vigorously stirred to emulsify the reaction solution, to which 10 milliliters of triethylamine was added and stirred at 20°C to 25°C for approximately an hour for polymerization. At the end of the polymerization, the reaction solution was separated into water phase and organic phase. The organic phase was neutralized with phosphoric acid, repeatedly washed with water until the electric conductivity of the wash fluid (water phase) became 10 μS/cm or less, thereby obtaining a methylene chloride resin solution of the aromatic polycarbonate resin (PC-1). The viscosity-average molecular weight of this aromatic polycarbonate resin (PC-1) was 16,000. The resulting resin solution was further allowed to drop into warm water kept at 50°C so that the solvent was removed by evaporation and the solidified product was ground at the same time, thereby obtaining white powdery sediments. The obtained sediments were filtrated and dried at 120°C for 24 hours to obtain powder of the aromatic polycarbonate resin (PC-1).

A methylene chloride resin solution of the aromatic polycarbonate resin (PC-3) was obtained by carrying out synthesis similar to the above-described exemplary PC-1 synthesis except p-tert-butylphenol in the above-described exemplary PC-1 synthesis was changed to 413.3 grams. The viscosity-average molecular weight of this aromatic polycarbonate resin (PC-3) was 11,000. The resulting resin solution was further allowed to drop into warm water kept at 50°C so that the solvent was removed by evaporation and the solidified product was ground at the same time, thereby obtaining white powdery sediments. The obtained sediments were filtrated and dried at 120°C for 24 hours to obtain powder of the aromatic polycarbonate resin (PC-3).

PC-4 as an aromatic polycarbonate resin-B was synthesized according to a method described below.

To 40 liters of a 5% by mass aqueous sodium hydroxide solution, 3.634 kilograms (15.939 mol) of bisphenol A manufactured by Nippon Steel & Sumikin Chemical Co., Ltd., 0.074 kilograms (0.276 mol) of 1,1-bis(4-hydroxyphenyl)cyclohexane manufactured by Taoka Chemical Co.,, Ltd. and 30 grams of hydrosulfite were dissolved. Then, to this, 17 liters of methylene chloride was added, and 2.1 kilograms (21.212 mol) of phosgene was infused for 15 minutes while stirring and keeping the temperature at 15°C. At the end of the infusion of phosgene, 22.3 grams of p-tert-butylphenol manufactured by DIC Corporation was added as a molecular weight regulator, and 10 liters of a 5% by mass aqueous sodium hydroxide solution and 20 liters of methylene chloride were further added and vigorously stirred to emulsify the reaction solution, to which 20 milliliters of triethylamine was added and stirred at 20°C to 25°C for approximately an hour for polymerization. At the end of the polymerization, the reaction solution was separated into water phase and organic phase. The organic phase was neutralized with phosphoric acid, repeatedly washed with water until the electric conductivity of the wash fluid (water phase) became 10 μS/cm or less, thereby obtaining a methylene chloride resin solution of the aromatic polycarbonate resin (PC-4). The viscosity-average molecular weight of this aromatic polycarbonate resin (PC-4) was 67,000. The resulting resin solution was further allowed to drop into warm water kept at 50°C so that the solvent was removed by evaporation and the solidified product was ground at the same time, thereby obtaining white powdery sediments. The obtained sediments were filtrated and dried at 120°C for 24 hours to obtain powder of the aromatic polycarbonate resin (PC-4).

PC-5 as an aromatic polycarbonate resin-B was synthesized according to a method described below.

To 40 liters of a 5% by mass aqueous sodium hydroxide solution, 6.000 kilograms (26.316 mol) of bisphenol A manufactured by Nippon Steel & Sumikin Chemical Co., Ltd. and 50 grams of hydrosulfite were dissolved. Then, to this, 32 liters of methylene chloride was added, and 3.6 kilograms (36.364 mol) of phosgene was infused for 25 minutes while stirring and keeping the temperature at 15°C. At the end of the infusion of phosgene, 31.6 grams of p-tert-butylphenol manufactured by DIC Corporation was added as a molecular weight regulator, and 10 liters of a 5% by mass aqueous sodium hydroxide solution and 53 liters of methylene chloride were further added and vigorously stirred to emulsify the reaction solution, to which 30 milliliters of triethylamine was added and stirred at 20°C to 25°C for approximately an hour for polymerization. At the end of the polymerization, the reaction solution was separated into water phase and organic phase. The organic phase was neutralized with phosphoric acid, repeatedly washed with water until the electric conductivity of the wash fluid (water phase) became 10 μS/cm or less, thereby obtaining a methylene chloride resin solution of the aromatic polycarbonate resin (PC-5). The viscosity-average molecular weight of this aromatic polycarbonate resin (PC-5) was 76,000. The resulting resin solution was further allowed to drop into warm water kept at 50°C so that the solvent was removed by evaporation and the solidified product was ground at the same time, thereby obtaining white powdery sediments. The obtained sediments were filtrated and dried at 120°C for 24 hours to obtain powder of the aromatic polycarbonate resin (PC-5).

A methylene chloride resin solution of the aromatic polycarbonate resin (PC-6) was obtained by carrying out synthesis similar to the above-described exemplary PC-5 synthesis except p-tert-butylphenol in the above-described exemplary PC-5 synthesis was changed to 48.5 grams. The viscosity-average molecular weight of this aromatic polycarbonate resin PC-6 was 50,000. The resulting resin solution was further allowed to drop into warm water kept at 50°C so that the solvent was removed by evaporation and the solidified product was ground at the same time, thereby obtaining white powdery sediments. The obtained sediments were filtrated and dried at 120°C for 24 hours to obtain powder of the aromatic polycarbonate resin (PC-6).

A methylene chloride resin solution of the aromatic polycarbonate resin (PC-7) was obtained by carrying out synthesis similar to the above-described exemplary PC-5 synthesis except p-tert-butylphenol in the above-described exemplary PC-5 synthesis was changed to 27.6 grams and methylene chloride at the end of the phosgene infusion was changed to 71 liters. The viscosity-average molecular weight of this aromatic polycarbonate resin PC-7 was 85,000. The resulting resin solution was further allowed to drop into warm water kept at 50°C so that the solvent was removed by evaporation and the solidified product was ground at the same time, thereby obtaining white powdery sediments. The obtained sediments were filtrated and dried at 120°C for 24 hours to obtain powder of the aromatic polycarbonate resin (PC-7).

In the above-described exemplary PC-5 synthesis, p-tert-butylphenol was changed to 22.2 grams and methylene chloride at the end of the phosgene infusion was changed to 80 liters. Other than those, synthesis similar to the above-described exemplary PC-5 synthesis was carried out. The viscosity-average molecular weight of the resulting aromatic polycarbonate resin (PC-9) was 100,000.

PC-1 to PC-9 were mixed by the method described below.

(Example 1)

73% by mass (in terms of polycarbonate resin) of the PC-1 methylene chloride resin solution and 27% by mass (in terms of polycarbonate resin) of the PC-4 methylene chloride resin solution were mixed in Static Mixer (registered trademark of Noritake Co., Limited) directly as the methylene chloride resin solutions to obtain a mixed resin solution. This mixed resin solution was allowed to drop into warm water kept at 50°C so that the solvent was removed by evaporation and the solidified product was ground at the same time, thereby obtaining white powdery sediments. The obtained sediments were filtrated and dried at 120°C for 24 hours to obtain an aromatic polycarbonate resin composition. The obtained resin composition was further added with the additives shown in Table 2 below to be used in Examples 5, 9 and 12 (Examples 5 and 9 are references).

(Example 2)

75% by mass (in terms of polycarbonate resin) of the PC-1 methylene chloride resin solution and 25% by mass (in terms of polycarbonate resin) of the PC-5 methylene chloride resin solution were mixed in Static Mixer directly as the methylene chloride resin solutions to obtain a mixed resin solution. This mixed resin solution was allowed to drop into warm water kept at 50°C so that the solvent was removed by evaporation and the solidified product was ground at the same time, thereby obtaining white powdery sediments. The obtained sediments were filtrated and dried at 120°C for 24 hours to obtain an aromatic polycarbonate resin composition. The obtained resin composition was further added with the additives shown in Table 2 below to be used in Examples 6, 10 and 13 (Examples 6 and 10 are references).

(Example 3) Reference

A resin solution having 9.1 kilograms of Iupilon S-3000F (PC-2) manufactured by Mitsubishi Engineering-Plastics Corporation dissolved in 78 kilograms of methylene chloride and a resin solution having 4.9 kilograms of the PC-6 powder dissolved in 65 kilograms of methylene chloride were mixed while stirring directly as the methylene chloride resin solutions to obtain a mixed resin solution. This mixed resin solution was allowed to drop into warm water kept at 50°C so that the solvent was removed by evaporation and the solidified product was ground at the same time, thereby obtaining white powdery sediments. The obtained sediments were filtrated and dried at 120°C for 24 hours to obtain an aromatic polycarbonate resin composition. The obtained resin composition was further added with the additives shown in Table 2 below to be used in Reference Examples 7, 11 and 14.

(Example 4) Reference

A resin solution having 8.4 kilograms of the PC-3 powder dissolved in 78 kilograms of methylene chloride and a resin solution having 5.6 kilograms of the PC-7 powder dissolved in 65 kilograms of methylene chloride were mixed while stirring directly as the methylene chloride resin solutions to obtain a mixed resin solution. This mixed resin solution was allowed to drop into warm water kept at 50°C so that the solvent was removed by evaporation and the solidified product was ground at the same time, thereby obtaining white powdery sediments. The obtained sediments were filtrated and dried at 120°C for 24 hours to obtain an aromatic polycarbonate resin composition. The obtained resin composition was further added with the additives shown in Table 2 below to be used in Reference Example 8.

(Comparative Example 1)

10.5 kilograms of the PC-1 powder and 3.5 kilograms of the PC-4 powder were mixed in a tumbler. This resin composition was further added with the additives shown in Table 2 below to be used in Comparative Examples 5, 7, 10 and 11.

(Comparative Example 2)

80% by mass (in terms of polycarbonate resin) of the PC-1 methylene chloride resin solution and 20% by mass (in terms of polycarbonate resin) of the PC-9 methylene chloride resin solution were mixed in Static Mixer directly as the methylene chloride resin solutions to obtain a mixed resin solution. This mixed resin solution was allowed to drop into warm water kept at 50°C so that the solvent was removed by evaporation and the solidified product was ground at the same time, thereby obtaining white powdery sediments. The obtained sediments were filtrated and dried at 120°C for 24 hours to obtain an aromatic polycarbonate resin composition. This resin composition was further added with the additives shown in Table 2 below to be used in Comparative Example 6.

(Comparative Example 3)

35.5 kilograms of the PC-1 methylene chloride resin solution (with the PC-1 resin content of 6.9 kilograms) and a resin solution having 10.4 kilograms of Iupilon K-4000F (PC-8) manufactured by Mitsubishi Engineering-Plastics Corporation dissolved in 91 kilograms of methylene chloride were mixed in Static Mixer directly as the methylene chloride resin solutions to obtain a mixed resin solution. This mixed resin solution was allowed to drop into warm water kept at 50°C so that the solvent was removed by evaporation and the solidified product was ground at the same time, thereby obtaining white powdery sediments. The obtained sediments were filtrated and dried at 120°C for 24 hours to obtain an aromatic polycarbonate resin composition. This resin composition was further added with the additives shown in Table 2 below to be used in Comparative Example 8.

(Comparative Example 4)

10.5 kilograms of the PC-1 powder and 3.5 kilograms of the PC-5 powder were mixed in a tumbler. This resin composition was further added with the additives shown in Table 2 below to be used in Comparative Example 9.

(Reference Examples 5-11 and 14), (Examples 12 and 13) and (Comparative Examples 5-11)

In Examples 5-14 and Comparative Examples 5-11, pentaerythritoltetrastearate under the "trade name: Loxiol VPG861" manufactured by Cognis Japan Ltd. was used as a mold release agent (1) while stearic acid under the "trade name: NAA180" manufactured by Nippon Oil & Fats Co., Ltd. was used as a mold release agent (2).
Moreover, in Examples 9-14 and Comparative Examples 7-11, potassium perfluorobutane sulfonate under the "trade name: Bayowet C4" manufactured by Lanxess was used as a flame retardant.
Furthermore, in Examples 12-14 and Comparative Examples 10-11, a methyl methacrylate-trimethylolpropanetrimethacrylate copolymer as acrylic resin microparticles with an average particle size of 2.3 $\mu$m were used as diffuser microparticles (1) while polyalkyl silsesquioxane microparticles with an average particle size of 2.3$\mu$m were used as diffuser microparticles (2).
The particle sizes and the particle size distribution of the polyalkyl silsesquioxane microparticles were measured within a region of 0.4-12 $\mu$m by Coulter Counter method using a grain size distribution measurement device Multisizer 4 manufactured by Beckman Coulter, after applying ultrasound for 3 minutes under the conditions using dispersion medium ISOTON II, an aperture size of 20 $\mu$m and ethanol as the dispersant to uniformly disperse the particles into the measurement solvent.
The number-based particle sizes of the (meth)acrylic resin microparticles are measured by Coulter Counter method, and is defined to be carried out within a region with a diameter of 0.4-12 $\mu$m. In addition, the average particle size is a number-based average particle size.
To the polycarbonate resin compositions prepared in Examples 1-4 and Comparative Examples 1-4, the additives shown in Table 2 were further added to prepare the polycarbonate resin compositions of Examples 5-14 and Comparative Examples 5-11 by the following method. Specifically, the components at the contents shown in Table 2 (additive proportion, % by mass) were mixed in a tumbler for 20 minutes and then supplied to a twin-screw extruder (TEX30XCT) manufactured by The Japan Steel Works, LTD. equipped with a vent, to be kneaded under the conditions: screw rotation speed of 200 rpm, an outflow of 20 kilograms/hour and a barrel temperature of 310°C. The molten resin composition extruded into strands was rapidly cooled in a water bath and pelletized using a pelletizer, thereby obtaining pellets of the polycarbonate resin composition.
Subsequently, in a transparency test, the obtained pellets were dried at 120°C for 5 hours and subjected to injection molding in an injection molding machine (M150AII-SJ manufactured by Meiki Co., Ltd.) under the conditions: a cylinder temperature of 290°C, a mold temperature of 80°C and a molding cycle of 50 seconds, to mold triple-stage plates with a length of 9 cm and a width of 5 cm (thicknesses of 1, 2 and 3 mm) as test specimens. Each stage had a length of 3 cm and a width of 5 cm. In a combustion characteristics (flame retardancy) test, the obtained pellets were dried at 120°C for 5 hours and then subjected to injection molding in an injection molding machine (J50-EP manufactured by The Japan Steel Works, LTD.) under the conditions: a cylinder temperature of 260°C, a mold temperature of 80°C and a molding cycle of 30 seconds, to mold test specimens for UL test with a length of 125 mm, a width of 13 mm and a thickness of 1.2 mm to evaluate flame retardancy by UL94 test process.

With respect to the fluidities of the resin compositions, Q value, i.e., the amount of molten resin that flows out from an orifice with diameter 1 mm x length 10 mm at a temperature of 280°C and a load of 1.57 x $10^7$ Pa, was measured using a Koka flow tester.

The transmittance shown in Table 2 is pursuant to JIS K-7361-1, which are values obtained by measuring the total light transmittance (units "%") for each of the thicknesses 1 mm, 2 mm and 3 mm of the above-described triple-stage plates (thicknesses of 1, 2 and 3 mm) as the test specimens with NDH-2000 turbidimeter manufactured by Nippon Denshoku Industries Co., Ltd..

The dispersion degrees shown in Table 2 were determined by measuring the brightnesses for each of the thicknesses 1 mm, 2 mm and 3 mm of the above-described triple-stage plates (thicknesses of 1,2 and 3 mm) as test specimens with GP-5 GONIOPHOTOMETER manufactured by MURAKAMI COLOR RESEARCH LABORATORY Co., Ltd.under the conditions: incident light: 0°, tilt angle: 0°, light-receiving range: 0°-90°, light flux diaphragm: 2.0 and light-receiving diaphragm: 3.0, and then determining, as the dispersion degree (°), an angle that halves the brightness relative to the brightness at 0°. A higher dispersion degree will result higher light diffusion, which is favorable when used as a light cover because light from a light source will be diffused to a higher degree, illuminance can be kept over a wider area, and it has an effect of decreasing visibility of the light source.

The number of unmelted polycarbonate pieces having long diameters of 100 $\mu$m or more that exist in a 3 mm-thick part in a 5 cm x 3 cm region of the triple-stage plates used for the haze value measurement was counted with microscope VHX-1000 manufactured by Keyence Corporation.

The various measurement results obtained in Examples 5-14 and Comparative Examples 5-11 are shown in Table 2 below.

[Table 2]

| 1. Transparency | | | | | | | |
|---|---|---|---|---|---|---|---|
| Viscosity-average molecular weight | | Examples | | | | Comparative Examples | |
| | | 5 | 6 | 7 | 8 | 5 | 6 |
| PC-1 | 16,000 | 73 | 75 | | | 75 | 80 |
| PC-2 | 21,000 | | | 65 | | | |
| PC-3 | 11,000 | | | | 60 | | |
| PC-4 | 67,000 | 27 | | | | 25 | |
| PC-5 | 76,000 | | 25 | | | | |
| PC-6 | 50,000 | | | 35 | | | |
| PC-7 | 85,000 | | | | 40 | | |
| PC-9 | 100,000 | | | | | | 20 |
| Flame retardant | Mass% | - | - | - | - | - | - |
| Mold release agent (1) | Mass% | 0.1 | 0.1 | 0.1 | 0.1 | 0.1 | 0.1 |
| Mold release agent (2) | Mass% | 0.1 | 0.1 | 0.1 | 0.1 | 0.1 | 0.1 |
| Fluidity | (x$10^{-2}$cc/sec) | 6.9 | 6.3 | 7.1 | 7.5 | 7.0 | 4.6 |
| Transparency | Haze (%) | 0.3 | 0.3 | 0.3 | 0.2 | 2.1 | 4.2 |
| Unmelted pieces | (number) | 2 | 2 | 1 | 0 | 30 | 50 or more |
| 2. Flame retardancy | | | | | | | |
| Viscosity-average molecular weight | | Examples | | | Comparative Examples | | |
| | | 9 | 10 | 11 | 7 | 8 | 9 |
| PC-1 | 16,000 | 73 | 75 | | 75 | 40 | 75 |

(continued)

| 2. Flame retardancy | | | | | | | |
|---|---|---|---|---|---|---|---|
| Viscosity-average molecular weight | | Examples | | | Comparative Examples | | |
| | | 9 | 10 | 11 | 7 | 8 | 9 |
| PC-2 | 21,000 | | | 65 | | | |
| PC-4 | 67,000 | 27 | | | 25 | | |
| PC-5 | 76,000 | | 25 | | | | 25 |
| PC-6 | 50,000 | | | 35 | | | |
| PC-8 | 39,000 | | | | | 60 | |
| Flame retardant | Mass% | 0.08 | 0.06 | 0.08 | 0.001 | 0.08 | 0.15 |
| Mold release agent (1) | Mass% | 0.1 | 0.1 | 0.1 | 0.1 | 0.1 | 0.1 |
| Mold release agent (2) | Mass% | 0.1 | 0.1 | 0.1 | 0.1 | 0.1 | 0.1 |
| Fluidity | $(\times 10^{-2}\text{cc/sec})$ | 7.2 | 6.3 | 7.1 | 7.2 | 5.3 | 6.0 |
| Transparency | Haze (%) | 0.5 | 0.4 | 0.5 | 2.1 | 0.5 | 5.6 |
| Unmelted pieces | (number) | 3 | 2 | 0 | 35 | 0 | 50 or more |
| Flame retardancy | Number of vertical burning drips | 0/10 | 0/10 | 0/10 | 5/10 | 5/10 | 0/10 |
| | Number of cotton ignited | 0/10 | 0/10 | 0/10 | 5/10 | 5/10 | 0/10 |
| | TOTAL/MAX | 35/7 | 32/6 | 41/8 | 74/19 | 70/18 | 38/6 |
| | UL-94 | V-0 | V-0 | V-0 | V-2 | V-2 | V-0 |
| 3. Dispersibility | | | | | | | |
| Viscosity-average molecular weight | | Examples | | | Comparative Examples | | |
| | | 12 | 13 | 14 | 10 | 11 | |
| PC-1 | 16,000 | 73 | 75 | | 75 | 75 | |
| PC-2 | 21,000 | | | 65 | | | |
| PC-4 | 67,000 | 27 | | | 25 | 25 | |
| PC-5 | 76,000 | | 25 | | | | |
| PC-6 | 50,000 | | | 35 | | | |
| Flame retardant | Mass% | 0.08 | 0.08 | 0.08 | 0.08 | 0.08 | |
| Mold release agent (1) | Mass% | 0.1 | 0.1 | 0.1 | 0.1 | 0.1 | |
| Mold release agent (2) | Mass% | 0.1 | 0.1 | 0.1 | 0.1 | 0.1 | |
| Dispersant (1) | Mass% | 1 | 4 | - | 1 | - | |
| Dispersant (2) | Mass% | - | - | 0.5 | - | 0.5 | |
| Fluidity | $(\times 10^{-2}\text{cc/sec})$ | 7.2 | 6.2 | 7.1 | 7.8 | 7.8 | |
| Flame retardancy | UL-94 | V-0 | V-0 | V-0 | V-0 | V-0 | |
| Transmittance (%) | 1mmt | 88 | 64 | 74 | 58 | 49 | |
| Dispersion degree | 1mmt | 22 | 49 | 30 | 25 | 33 | |
| Transmittance (%) | 2mmt | 73 | 52 | 57 | 47 | 37 | |
| Dispersion degree | 2mmt | 35 | 58 | 48 | 37 | 49 | |
| Transmittance (%) | 3mmt | 61 | 45 | 49 | 38 | 30 | |

(continued)

| 3. Dispersibility | | | | | | |
| --- | --- | --- | --- | --- | --- | --- |
| Viscosity-average molecular weight | | Examples | | | Comparative Examples | |
| | | 12 | 13 | 14 | 10 | 11 |
| Dispersion degree | 3mmt | 43 | 59 | 51 | 39 | 52 |

As can be appreciated from Table 2, in Examples 5-8, the 3 mm-thick plate-like molded sections molded from the aromatic polycarbonate resin compositions produced by the production method of the present invention had low haze values of 2% or lower while the numbers of the unmelted polycarbonate pieces having long diameters of 100 $\mu$m or longer existing within the 5 cm x 3 cm regions were 5 or less, and thus superior in transparency.

Similarly, in Examples 9-11, the 3 mm-thick plate-like molded sections molded from the aromatic polycarbonate resin compositions produced by the production method of the present invention satisfied UL-94 V-0, had low haze values of 2% or lower while the numbers of the unmelted polycarbonate pieces having long diameters of 100 $\mu$m or longer existing within the 5 cm x 3 cm regions were 5 or less, and thus superior in transparency.

Also similarly, in Examples 12-14, the total light transmittance as well as the light diffusion were both found to be excellent and even more the flame-retardant was also superior with UL-94 of V-0.

On the other hand, although Comparative Example 5 relative to Example 5, Comparative Example 7 relative to Example 9, and Comparative Examples 10 and 11 relative to Example 12 had almost the same combination of PC-1 and PC-4, their transparencies were poor since they were both blended as powder.

Moreover, in Comparative Example 6, since the aromatic polycarbonate resin (PC-9) with a viscosity-average molecular weight of 100,000 was used instead of the aromatic polycarbonate resin-B, the transparency was poor.

In Comparative Example 8, since the aromatic polycarbonate resin-B component having a viscosity-average molecular weight of 50,000-90,000 was not blended, the resultant did not satisfy the UL-94 V-0 standard.

Furthermore, in Comparative Example 9, since the components were blended as powder, and further the proportion of the flame retardant added was 0.1% by mass or more, the transparency was poor.

INDUSTRIAL APPLICABILITY

A polycarbonate resin composition as a preferable embodiment of the present invention can be used as a raw material for a polycarbonate resin molded article having flame retardancy and transparency with less unmelted pieces that impair light transmittance. The polycarbonate resin molded article of the present invention can favorably be used as an electric and electronic equipment, an office automation equipment, an information terminal equipment, a machinery part, a home electric appliance, a vehicle component, a building component, various containers, leisure goods/sundries, a part of a lighting instrument or the like, a parts of various home electrical products, a housing, a container, a cover, a compartment or a case of an electrical apparatus, a cover or a case of a lighting apparatus, or the like.

**Claims**

1. An aromatic polycarbonate resin composition obtained by (i) dissolving an aromatic polycarbonate resin-A having a viscosity-average molecular weight of 11,000-21,000 and an aromatic polycarbonate resin-B having a viscosity-average molecular weight of 67,000-85,000 in a solvent and (ii) removing the solvent from the resulting resin solution, and wherein the aromatic polycarbonate resin composition comprises diffuser microparticles having an average particle size of 1-4 $\mu$m as measured by Coulter Counter method within a region with a diameter of 0.4-12 $\mu$m, and said diffuser microparticles are selected from the group consisting of polyorganosilsesquioxane microparticles and (meth)acrylic resin microparticles,

   wherein the resin composition comprises an alkali metal salt of an organic sulfonic acid and the content of the alkali metal salt of the organic sulfonic acid is 0.005-0.1% by mass relative to the total mass (100% by mass) of the aromatic polycarbonate resin-A and the aromatic polycarbonate resin-B,

   wherein the aromatic polycarbonate resin-A is contained in an amount of 60-90% by mass and the aromatic polycarbonate resin-B is contained in an amount of 10-40% by mass relative to the total amount of the aromatic polycarbonate resin-A and the aromatic polycarbonate resin-B, and

   wherein a haze value of a plate-like molded article having a thickness of 3.0 mm molded from the aromatic polycarbonate resin composition is 2% or lower, wherein measurement of the haze value for evaluating transparency is carried out in accordance with JIS K-7136, and the number of unmelted polycarbonate pieces having a long diameter of 100 $\mu$m or more existing within a region of 5 cm x 3 cm of the plate-like molded article is 10 or less, wherein the number of unmelted polycarbonate pieces having a long diameter of 100 $\mu$m or more existing within the region of 5 cm x 3 cm of the 3 mm-thick part of triple-stage plates used for the haze value measurement is counted with a microscope,
wherein a test specimen for UL test having a thickness of 1.2 mm molded from the aromatic polycarbonate resin composition satisfies the UL-94 V-0 standard.

2. The aromatic polycarbonate resin composition according to Claim 1, wherein the aromatic polycarbonate resin composition shows a Q value of 0.01-0.1 cm$^3$/sec, the Q value being the outflow of molten resin per unit time at 280°C under a load of 1.57 x 10$^7$ Pa using a Koka flow tester having an orifice of 1 mm in diameter and 10 mm in length.

3. The aromatic polycarbonate resin composition according to Claim 1 or 2, comprising the diffuser microparticles in an amount of 0.01-10% by mass relative to the total mass (100% by mass) of the aromatic polycarbonate resin-A and the aromatic polycarbonate resin-B.

4. A molded article molded using the aromatic polycarbonate resin composition according to any one of Claims 1 to 3 as a raw material.

## Patentansprüche

1. Aromatische Polycarbonatharz-Zusammensetzung, erhalten durch (i) Auflösen von einem aromatischen Polycarbonatharz-A mit einem viskositätsmittleren Molekulargewicht von 11.000 bis 21.000 und einem aromatischen Polycarbonatharz-B mit einem viskositätsmittleren Molekulargewicht von 67.000-85.000 in einem Lösungsmittel und (ii) Entfernen des Lösungsmittels aus der resultierenden Harzlösung, und wobei die aromatische Polycarbonatharz-Zusammensetzung Diffusor-Mikropartikel mit einer durchschnittlichen Partikelgröße von 1 bis 4 $\mu$m umfasst, die mit einem Coulter Counter-Verfahren in einem Bereich mit einem Durchmesser von 0,4 bis 12 $\mu$m gemessen wird, und die Diffusor-Mikropartikel aus der Gruppe ausgewählt sind, die aus aus Polyorganosilsesquioxan-Mikropartikeln und (Meth)acrylharz-Mikropartikeln besteht,
wobei die Harzzusammensetzung ein Alkalimetallsalz einer organischen Sulfonsäure umfasst und der Gehalt des Alkalimetallsalzes der organischen Sulfonsäure 0,005 bis 0,1 Massen-%, bezogen auf die Gesamtmasse (100 Massen-%) des aromatischen Polycarbonatharzes-A und des aromatischen Polycarbonatharzes-B, beträgt,
wobei bezogen auf die Gesamtmenge des aromatischen Polycarbonatharzes-A und des aromatischen Polycarbonatharz-B das aromatische Polycarbonatharz-A in einer Menge von 60 bis 90 Massen-% enthalten ist und das aromatische Polycarbonatharz-B in einer Menge von 10 bis 40 Massen-% enthalten ist, und
wobei ein Trübungswert eines plattenförmigen Formgegenstands mit einer Dicke von 3,0 mm, der aus der aromatischen Polycarbonatharz-Zusammensetzung geformt ist, 2% oder weniger ist, wobei die Messung des Trübungswerts zur Bewertung der Transparenz gemäß JIS K-7136 durchgeführt wird, und die Anzahl der ungeschmolzenen Polycarbonatstücke mit einem Langdurchmesser von 100 $\mu$m oder mehr, die in einem Bereich von 5 cm x 3 cm des plattenförmigen Formgegenstands vorhanden sind, 10 oder weniger beträgt, wobei die Anzahl der ungeschmolzenen Polycarbonatstücke mit einen Langdurchmesser von 100 $\mu$m oder mehr, die in dem Bereich von 5 cm x 3 cm des 3 mm dicken Teils der dreistufigen Platten, die für die Messung des Trübungswerts verwendet werden, mit einem Mikroskop gezählt wird,
wobei ein Probenkörper für einen UL-Test mit einer Dicke von 1,2 mm, der aus der aromatischen Polycarbonatharz-Zusammensetzung geformt ist, den Standard UL-94 V-0 erfüllt.

2. Aromatische Polycarbonatharz-Zusammensetzung gemäß Anspruch 1, wobei die aromatische Polycarbonatharz-Zusammensetzung einen Q-Wert von 0,01 bis 0,1 cm$^3$/sec aufweist, wobei der Q-Wert der Ausfluss von geschmolzenem Harz pro Zeiteinheit bei 280°C mit einer Last von 1,57 x 10$^7$ Pa unter Verwendung eines Koka-Fließprüfgeräts mit einer Öffnung von 1 mm Durchmesser und 10 mm Länge ist.

3. Aromatische Polycarbonatharz-Zusammensetzung gemäß Anspruch 1 oder 2, umfassend die Diffusor-Mikropartikel in einer Menge von 0,01 bis 10 Massen-%, bezogen auf die Gesamtmasse (100 Massen-%) des aromatischen Polycarbonatharzes-A und des aromatischen Polycarbonatharzes-B.

4. Formgegenstand, geformt unter Verwendung der aromatischen Polycarbonatharz-Zusammensetzung gemäß einem der Ansprüche 1 bis 3 als Ausgangsmaterial.

**Revendications**

1. Composition de résines de polycarbonate aromatique obtenue par (i) la dissolution d'une résine de polycarbonate aromatique A présentant un poids moléculaire moyen en viscosité de 11000 à 21000 et d'une résine de polycarbonate aromatique B présentant un poids moléculaire moyen en viscosité de 67 000 à 85 000 dans un solvant et (ii) l'élimination du solvant de la solution de résines résultante, et dans laquelle la composition de résines de polycarbonate aromatique comprend des microparticules de diffuseur présentant une taille particulaire moyenne de 1 à 4 $\mu$m telle que mesurée par un procédé faisant appel à un compteur Coulter dans une région ayant un diamètre de 0,4 à 12 $\mu$m, et lesdites microparticules de diffuseur sont sélectionnées dans le groupe constitué de microparticules de polyorganosilsesquioxane et de microparticules de résine (méth)acrylique, dans laquelle la composition de résine comprend un sel de métal alcalin d'un acide sulfonique organique et la teneur du sel de métal alcalin de l'acide sulfonique organique est de 0,005 à 0,1 % en masse par rapport à la masse totale (100 % en masse) de la résine de polycarbonate aromatique A et de la résine de polycarbonate aromatique B, dans laquelle la résine de polycarbonate aromatique A est contenue en une quantité de 60 à 90 % en masse et la résine de polycarbonate aromatique B est contenue en une quantité de 10 à 40 % en masse par rapport à la quantité totale de la résine de polycarbonate aromatique A et de la résine de polycarbonate aromatique B, et dans laquelle une valeur de trouble d'un article moulé de type plaque ayant une épaisseur de 3,0 mm moulée à partir de la composition de résines de polycarbonate aromatique est de 2 % ou moins, dans laquelle la mesure de la valeur de trouble pour évaluer la transparence est réalisée selon la norme JIS K-7136, et le nombre de morceaux de polycarbonate non fondus ayant un diamètre long de 100 $\mu$m ou plus existant dans une région de 5 cm x 3 cm de l'article moulé de type plaque est de 10 ou moins, dans laquelle le nombre de morceaux de polycarbonate non fondus ayant un diamètre long de 100 $\mu$m ou plus existant dans la région de 5 cm x 3 cm de la partie d'épaisseur de 3 mm de plaques à trois niveaux utilisées pour la mesure de la valeur de trouble est compté avec un microscope, dans laquelle un spécimen de test pour un test UL ayant une épaisseur de 1,2 mm moulé à partir de la composition de résines de polycarbonate aromatique satisfait la norme UL-94 V-0.

2. Composition de résines de polycarbonate aromatique selon la revendication 1, dans laquelle la composition de résines de polycarbonate aromatique présente une valeur Q de 0,01 à 0,1 cm$^3$/seconde, la valeur Q étant l'écoulement de résine fondue par unité de temps à 280 °C sous une charge de 1,57 x 10$^7$ Pa en utilisant un dispositif de test d'écoulement Koka ayant un orifice de 1 mm de diamètre et de 10 mm de longueur.

3. Composition de résines de polycarbonate aromatique selon la revendication 1 ou 2, comprenant les microparticules de diffuseur en une quantité de 0,01 à 10 % en masse par rapport à la masse totale (100% en masse) de la résine de polycarbonate aromatique A et de la résine de polycarbonate aromatique B.

4. Article moulé ayant été moulé en utilisant la composition de résines de polycarbonate aromatique selon l'une quelconque des revendications 1 à 3 comme matière première.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H02251561 B
- JP H0959505 B
- JP 2012031244 A
- JP 4881560 B
- JP S5645945 B
- WO 2011132510 A1
- WO 2006008858 A
- JP H01217039 B